(19) Europäisches Patentamt / European Patent Office / Office européen des brevets

(11) **EP 4 676 089 A1**

(12) **EUROPEAN PATENT APPLICATION**
published in accordance with Art. 153(4) EPC

(43) Date of publication:
07.01.2026 Bulletin 2026/02

(21) Application number: 24762916.5

(22) Date of filing: 24.01.2024

(51) International Patent Classification (IPC):
*H04R 9/06* (2006.01)

(52) Cooperative Patent Classification (CPC):
B60N 2/879; B60R 11/00; B60R 11/02; H04R 9/02;
H04R 9/06

(86) International application number:
PCT/CN2024/073904

(87) International publication number:
WO 2024/179233 (06.09.2024 Gazette 2024/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.02.2023 CN 202310233412

(71) Applicant: Shenzhen Yinwang Intelligent
Technologies Co., Ltd.
Shenzhen, Guangdong 518110 (CN)

(72) Inventor: CHEN, Jinheng
Shenzhen, Guangdong 518129 (CN)

(74) Representative: Pfenning, Meinig & Partner mbB
Patent- und Rechtsanwälte
Theresienhöhe 11a
80339 München (DE)

(54) **ACOUSTIC WAVEGUIDE, LOUDSPEAKER ASSEMBLY, AUTOMOBILE HEADREST, AND VEHICLE**

(57) An acoustic waveguide, a speaker assembly, a vehicle headrest, and a vehicle are provided, to resolve a problem that when a head of a user shakes, an ear of the user easily deviates from a sound field, resulting in poor driving experience. A sound guide channel is provided on a sound guide body in the acoustic waveguide, the sound guide channel includes a sound inlet and a sound outlet, the sound inlet is provided directly opposite to a sound source, the sound outlet is in an elliptical shape, a major axis of the elliptical shape is parallel to a preset direction, and the preset direction is related to a sound field expansion direction, to increase a width of the sound field in the preset direction. In this way, when the head of the user shakes, the ear of the user can always be kept in the sound field. This prevents the ear of the user from deviating from the sound field, and improves driving experience.

FIG. 9

## Description

This application claims priority to Chinese Patent Application No. 202310233412.9, filed with the China National Intellectual Property Administration on February 28, 2023 and entitled "ACOUSTIC WAVEGUIDE, SPEAKER ASSEMBLY, VEHICLE HEADREST, AND VEHICLE", which is incorporated herein by reference in its entirety.

## TECHNICAL FIELD

Embodiments of this application relate to the field of sound guide device technologies, and specifically, to an acoustic waveguide, a speaker assembly, a vehicle headrest, and a vehicle.

## BACKGROUND

A speaker is usually disposed on a vehicle. However, a sound field of the speaker is fixed. When a head of a user shakes, an ear of the user easily deviates from the sound field, resulting in poor sound listening experience.

## SUMMARY

Embodiments of this application provide an acoustic waveguide, a speaker assembly, a vehicle headrest, and a vehicle, so that a width of a sound field in a preset direction can be increased, thereby preventing an ear of a user from deviating from the sound field, and improving sound listening experience.

According to a first aspect, an embodiment of this application provides an acoustic waveguide, including: a sound guide body, where a sound guide channel is provided on the sound guide body, the sound guide channel includes a sound inlet and a sound outlet, the sound inlet is provided directly opposite to a sound source, the sound outlet is in an elliptical shape, a major axis of the elliptical shape is parallel to a preset direction, and the preset direction is related to a sound field expansion direction.

Through the foregoing disposition, the sound outlet in the acoustic waveguide is in the elliptical shape, the major axis of the elliptical shape is parallel to the preset direction, and the preset direction is related to the sound field expansion direction. After a sound wave is emitted by the sound source, the sound wave enters the sound guide channel through the sound inlet, and the sound wave is propagated from the sound inlet to the sound outlet in the sound guide channel. During propagation, a shape of a sound field changes with a shape of a cross section of the sound guide channel. In addition, a propagation direction of the sound field is approximately parallel to a center line of the sound guide channel, and changes with a change of the center line of the sound guide channel, to implement guidance of a sound wave. A shape of the sound field at the sound outlet is the same as a shape of the sound outlet. In comparison with a circular sound outlet with an equal area, the major axis of the elliptical shape is greater than a diameter of a circle. Therefore, a width of the sound field at the elliptical sound outlet in a direction parallel to the major axis is greater than a width of a sound field at the circular sound outlet. This increases a width of the sound field in the preset direction. In this way, when a head of a user shakes, an ear of the user is always kept in the sound field, so that the ear of the user is prevented from deviating from the sound field. This improves sound listening experience.

In some embodiments that may include the foregoing embodiments, the cross section of the sound guide channel is in an elliptical shape, and an area of the sound inlet is equal to an area of the cross section of the sound guide channel. In other words, the area of the sound inlet is equal to an area of any cross section that is of the sound guide channel and that is perpendicular to a sound wave transmission direction. A sound wave is propagated in the sound guide channel under specific conditions. A sound wave whose frequency is greater than a cut-off frequency may be propagated in the sound guide channel, and transmission of a sound wave whose frequency is lower than the cut-off frequency is limited. The area of the cross section of the sound guide channel remains unchanged, and in this case, a winding index of the sound guide channel is zero; and the cut-off frequency is in a multiple relationship with the winding index, and when the winding index is zero, the cut-off frequency is also zero, that is, there is no cut-off frequency. Therefore, impact of the cut-off frequency on sound wave transmission is avoided, and a limitation on sound wave transmission is avoided. The winding index is a parameter that determines a change speed of the area of the cross section of the sound guide channel.

In some embodiments that may include the foregoing embodiments, the area of the sound inlet is equal to an area of the sound outlet. Through this disposition, sound intensity in a unit area of the sound outlet is the same as sound intensity in a unit area of the sound inlet. This ensures sound quality at the sound outlet. In some embodiments that may include the foregoing embodiments, the sound inlet is in a circular shape, a major axis of the cross section is a first target multiple of a radius of the sound inlet, the first target multiple is a first exponential function with a preset constant as a base, a minor axis of the cross section is a second target multiple of the radius of the sound inlet, the second target multiple is a second exponential function with the preset constant as a base, an exponent of the first exponential function and an exponent of the second exponential function are additive inverses, and the preset constant is greater than 1.

Through this disposition, when a length of the major axis of the cross section of the sound guide channel changes, it can still be ensured that the area of the cross section of the sound guide channel remains unchanged (that is, the area of the sound inlet is equal to the area of the cross section that is of the sound guide channel and that is perpendicular to the sound wave transmission direction). This avoids impact of the cut-off frequency on sound wave transmission.

Through the foregoing disposition, the area of the cross section N of the sound guide channel $S = \pi ab = \pi r^2$, where S is the area of the cross section N, $\pi$ is a ratio of a circumference to a diameter of a circle, $b$ is the minor axis of the cross section, and $a$ is the major axis of the cross section. Functions of the major axis and the minor axis of the sound guide channel are simplified while ensuring that the area of the cross section of the sound guide channel remains unchanged.

In some embodiments that may include the foregoing embodiments, the cross section of the sound guide channel and the radius of the sound inlet satisfy the following relationship:

$$b = rd^{-\alpha z};$$

and

$$a = rd^{\alpha z},$$

where

$b$ is the minor axis of the cross section, $a$ is the major axis of the cross section, $r$ is the radius of the sound inlet, $\alpha$ is a constant greater than 0, $d$ is the preset constant, and $z$ is a distance between the cross section and the sound inlet.

In some embodiments that may include the foregoing embodiments, $d = e$, where $e$ is a natural constant.

In some embodiments that may include the foregoing embodiments, a projection of the sound inlet onto the sound source coincides with a diaphragm of the sound source. In this way, the sound inlet is directly opposite to the diaphragm. Through this disposition, a sound wave emitted by the sound source may directly enter the sound inlet. This reduces a loss of the sound wave. The projection of the sound inlet onto the sound source may completely coincide with the diaphragm, or the diaphragm may be located inside the projection of the sound inlet onto the sound source. In conclusion, the sound inlet should be capable of completely covering the diaphragm of the sound source.

According to a second aspect, an embodiment of this application provides a speaker assembly, including a sound source and the acoustic waveguide described above. The acoustic waveguide is connected to the sound source.

According to the speaker assembly provided in embodiments of this application, a sound guide channel is provided on a sound guide body in the acoustic waveguide, and the sound guide channel includes a sound inlet and a sound outlet. The sound inlet is provided directly opposite to the sound source, and the sound outlet is in an elliptical shape. A major axis of the elliptical shape is parallel to a preset direction, and the preset direction is related to a sound field expansion direction, to increase a width of the sound field in the preset direction. In this way, when a head of a user shakes, an ear of the user can always be kept in a sound field. This prevents the ear of the user from deviating from the sound field, and improves sound listening experience.

In some embodiments that may include the foregoing embodiments, the sound source includes a body and a diaphragm disposed on the body, the acoustic waveguide is connected to the body, and the diaphragm is disposed directly opposite to the sound inlet. Through this disposition, a sound wave emitted by the diaphragm may directly enter the sound guide channel through the sound inlet. This reduces a loss of the sound wave.

In some embodiments that may include the foregoing embodiments, the speaker assembly further includes a grille, and the grille is disposed between the diaphragm and the sound inlet. Through this disposition, the grille may prevent an external object from being in contact with the diaphragm, to avoid scratching the diaphragm, and may also prevent the external object from affecting vibration of the diaphragm due to contact between the external object and the diaphragm (for example, attaching of the external object to the diaphragm), to ensure that normal sound emission of the diaphragm is not affected.

According to a third aspect, an embodiment of this application further provides a vehicle headrest, including: an outer cover and the speaker assembly described above. The outer cover encloses an accommodation space, and the outer cover includes a contact surface in contact with a head of a user. The speaker assembly is disposed in the accommodation space, and a sound outlet is provided directly opposite to the contact surface.

According to the vehicle headrest provided in embodiments of this application, a sound guide channel is provided on a sound guide body in an acoustic waveguide, and the sound guide channel includes a sound inlet and the sound outlet. The sound inlet is provided directly opposite to the sound source, and the sound outlet is in an elliptical shape. A major axis of the elliptical shape is parallel to a preset direction, and the preset direction is related to a sound field expansion direction, to increase a width of the sound field in the preset direction. In this way, when the head of the user shakes, an ear of the user can always be kept in a sound field. This prevents the ear of the user from deviating from the sound field, and improves sound listening experience.

In some embodiments that may include the foregoing embodiments, there are two speaker assemblies, and the two speaker assemblies are spaced apart in a horizontal direction. It may be understood that horizontal setting herein is that the two speaker assemblies are spaced apart in an approximately horizontal direction, that is, a connection line between the two speaker assemblies may be parallel to a horizontal plane, or there may be a specific included angle between a connection line and a horizontal plane. Through this disposition, the head of the user may be located between the two speaker assemblies, and each speaker assembly corresponds to one ear of the user. This improves sound listening experience of the user.

In some embodiments that may include the foregoing embodiments, the speaker assembly includes a first speaker assembly, a second speaker assembly, a third speaker assembly, and a fourth speaker assembly, the first speaker assembly and the second speaker assembly are spaced apart in a vertical direction, the third speaker assembly and the fourth speaker assembly are spaced apart in the vertical direction, the first speaker assembly and the third speaker assembly are spaced apart in a horizontal direction, and the second speaker assembly and the fourth speaker assembly are spaced apart in the horizontal direction.

Through this disposition, two speaker assemblies are disposed on each of two sides of the head of the user in the horizontal direction. In this way, an area of a sound field on one side of the head of the user may be increased, to further prevent the ear from deviating from the sound field due to shaking of the head. This further improves sound listening experience.

In some embodiments that may include the foregoing embodiments, the vehicle headrest further includes a buffer, the buffer is disposed in the accommodation space, a mounting hole is provided on the buffer, and the speaker assembly is disposed in the mounting hole. Compared with the buffer and the speaker assembly being spaced apart in the accommodation space (disposing the speaker assembly outside the buffer), disposing the speaker assembly in the mounting hole on the buffer (disposing the speaker assembly in the buffer) can improve structure compactness of the vehicle headrest, and reduce a volume of the vehicle headrest while ensuring a large enough volume of the buffer.

In some embodiments that may include the foregoing embodiments, the speaker assembly may be flush with an end that is of the mounting hole and that faces the contact surface, or there is a specific distance between the speaker assembly and an end that is of the mounting hole and that faces the contact surface, to avoid damage to the outer cover caused by contact between the speaker assembly and the outer cover. This also avoids contact between the speaker assembly and the head of the user by using the outer cover, to avoid impact on experience of riding in a vehicle caused by abutting against the head of the user by the speaker assembly.

In some embodiments that may include the foregoing embodiments, the preset direction is perpendicular to the horizontal plane. The preset direction may be perpendicular to the horizontal plane, that is, the preset direction is parallel to the vertical direction, to increase a width of the sound field in the vertical direction. Because the width of the sound field in the vertical direction is large, in a traveling process of the vehicle, even if the head of the user shakes in the vertical direction, it can still be ensured that the ear of the user is located in the sound field, to prevent the ear of the user from deviating from the sound field. This avoids affecting sound listening experience.

In some embodiments that may include the foregoing embodiments, the preset direction is parallel to the horizontal plane. The preset direction is parallel to the horizontal plane, that is, the preset direction is parallel to the horizontal direction. In this case, a width of the sound field in the horizontal direction may be increased. Because the width of the sound field in the horizontal direction is large, in a traveling process of the vehicle, even if the head of the user shakes in the horizontal direction, it can still be ensured that the ear of the user is located in the sound field, to prevent the ear of the user from deviating from the sound field. This avoids affecting sound listening experience.

According to a fourth aspect, an embodiment of this application further provides a vehicle, including at least one of the acoustic waveguide described above, the speaker assembly described above, or the vehicle headrest described above.

According to a fifth aspect, an embodiment of this application further provides a vehicle, including a seat and the vehicle headrest described above. The seat includes a seat cushion and a backrest disposed at an end of the seat cushion, and the vehicle headrest is disposed on the backrest.

According to the vehicle provided in embodiments of this application, a sound guide channel is provided on a sound guide body in an acoustic waveguide, and the sound guide channel includes a sound inlet and a sound outlet. The sound inlet is provided directly opposite to a sound source, and the sound outlet is in an elliptical shape. A major axis of the elliptical shape is parallel to a preset direction, and the preset direction is related to a sound field expansion direction, to increase a width of a sound field in the preset direction. In this way, when a head of a user shakes, an ear of the user can always be kept in a sound field. This prevents the ear of the user from deviating from the sound field, and improves sound listening experience.

**BRIEF DESCRIPTION OF DRAWINGS**

FIG. 1 is a diagram of a structure of a vehicle according to an embodiment of this application;
FIG. 2 is a diagram of a structure of a seat according to an embodiment of this application;
FIG. 3 is a diagram 1 of a structure of a vehicle headrest according to an embodiment of this application;
FIG. 4 is a cross-sectional view in an A-A direction in FIG. 3;

FIG. 5 is a diagram 2 of a structure of a vehicle headrest according to an embodiment of this application;

FIG. 6 is a partially enlarged view of a position A in FIG. 2;

FIG. 7 is a top view of a vehicle according to an embodiment of this application;

FIG. 8 is a diagram of an audio link in a vehicle according to an embodiment of this application;

FIG. 9 is an exploded view 1 of a vehicle headrest according to an embodiment of this application;

FIG. 10 is an exploded view 2 of a vehicle headrest according to an embodiment of this application;

FIG. 11 is a perspective view of an acoustic waveguide according to an embodiment of this application;

FIG. 12 is a three-dimensional view of an acoustic waveguide according to an embodiment of this application;

FIG. 13 is a main view of the acoustic waveguide shown in FIG. 12;

FIG. 14 is a curve diagram of comparison between a difference between a maximum value and a minimum value of a sound pressure level of a cylindrical waveguide and a difference between a maximum value and a minimum value of a sound pressure level of an acoustic waveguide according to an embodiment of this application;

FIG. 15 is a diagram 3 of a structure of a vehicle headrest according to an embodiment of this application;

FIG. 16 is a diagram 4 of a structure of a vehicle headrest according to an embodiment of this application;

FIG. 17 is a distribution diagram of diaphragms present when a vehicle headrest has four speaker assemblies according to an embodiment of this application;

FIG. 18 is a diagram 1 of a structure of a vehicle headrest with four speaker assemblies according to an embodiment of this application;

FIG. 19 is a diagram 2 of a structure of a vehicle headrest with four speaker assemblies according to an embodiment of this application;

FIG. 20 is a diagram 3 of a structure of a vehicle headrest with four speaker assemblies according to an embodiment of this application; and

FIG. 21 is a diagram 4 of a structure of a vehicle headrest with four speaker assemblies according to an embodiment of this application.

Reference numerals:

100: vehicle; 110: wheel; 120: vehicle body; 121: cab; 122: passenger cabin; 123: vehicle door; 130: seat; 131: seat cushion; 132: backrest; 1321: first mounting hole; 1322: first clamping block; 140: vehicle headrest; 141: outer cover; 142: accommodation space;

143: contact surface; 144: headrest bracket; 1441: first fastening column; 1442: second fastening column; 1443: first clamping slot; 145: through hole; 146: buffer; 147: mounting hole; 150: speaker assembly; 151: sound source; 1511: body; 1512: diaphragm; 1513: grille; 152: acoustic waveguide; 1521: sound guide body; 1522: sound guide channel; 1523: sound inlet; 1524: sound outlet; 160: vehicle door speaker; 170: center speaker; 180: subwoofer; 190: surround sound speaker; 1501: first speaker assembly; 1502: second speaker assembly; 1503: third speaker assembly; 1504: fourth speaker assembly.

## DESCRIPTION OF EMBODIMENTS

To make the objectives, technical solutions, and advantages of embodiments of this application clearer, the following clearly and completely describes the technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without creative efforts shall fall within the protection scope of this application.

It should be noted that, in the descriptions of embodiments of this application, unless otherwise specified and limited, the terms "interconnect" and "connect" should be understood in a broad sense. For example, the terms may indicate a fixed connection or an integral connection, may indicate a mechanical connection or an electrical connection, or may indicate a direct connection, an indirect connection through an intermediate medium, or internal communication between two components. A person skilled in the art may understand specific meanings of the terms in embodiments of this application based on a specific situation.

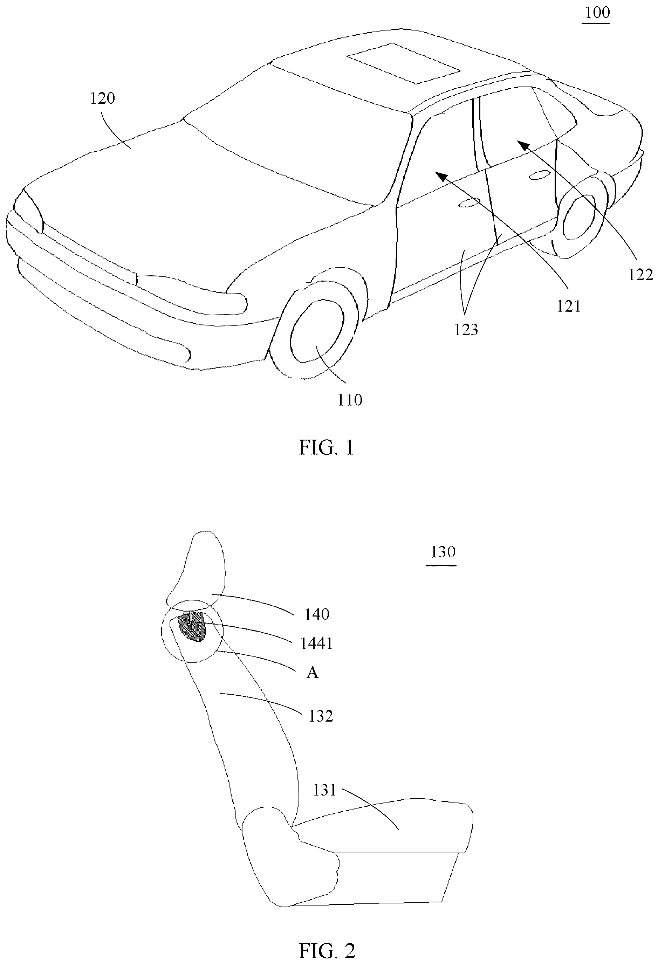

Refer to FIG. 1. An embodiment of this application provides a vehicle 100. The vehicle 100 includes a wheel 110, a power system, and a vehicle body 120. The power system and the wheel 110 are disposed on the vehicle body 120, and the power system is in transmission connection to the wheel 110 to drive the wheel 110 to rotate, to provide power for traveling of the vehicle 100. A quantity of wheels 110 may be 4, 6, 8, or the like. In embodiments of this application, an example in which the quantity of wheels 110 is 4 is used for description. However, it may be understood that the quantity of wheels 110 is not limited in embodiments of this application. Correspondingly, two wheels 110 (two front wheels) of the four wheels 110 are disposed on a front side of the vehicle body 120 in a longitudinal direction (a traveling direction of the vehicle 100), and the other two wheels 110 (two rear wheels 110) are disposed on a rear side of the vehicle body 120 in the longitudinal direction.

It may be understood that the power system may be in transmission connection to the two front wheels 110 (front-wheel drive), or the power system may be in transmission connection to the two rear wheels 110 (rear-wheel drive), or the power system may be in transmission connection to the four wheels 110 (four-wheel drive). This is not limited in embodiments of this application. In embodiments of this application, the vehicle 100 may be a fuel vehicle. Correspondingly, the power system includes an internal combustion engine and a gearbox in transmission connection to the internal combustion engine. The gearbox is in transmission connection to the wheel 110. The internal combustion engine drives, by using the gearbox, the wheel 110 to rotate, to drive the vehicle 100 to travel. Certainly, the vehicle 100 in embodiments of this application may alternatively be an electric vehicle. Correspondingly, the power system includes a motor and a power battery electrically connected to the motor. The motor is in transmission connection to the wheel 110. During traveling, the power battery drives the motor to work to drive the wheel 110 to rotate, to provide a driving force.

In the foregoing implementation, the vehicle body 120 encloses a cab 121 and a passenger cabin 122. When riding in the vehicle, a user is located in the cab 121 or the passenger cabin 122. To facilitate sitting of the user, the vehicle 100 further includes a seat 130 shown in FIG. 2. Seats 130 are disposed in the cab 121 and the passenger cabin 122. The seat 130 includes a seat cushion 131 and a backrest 132. The seat cushion 131 is connected to the vehicle body 120, and the backrest 132 is disposed at an end (a rear end) of the seat cushion 131. The user may sit on the seat cushion 131, and a trunk leans against the backrest 132. The vehicle 100 further includes a vehicle headrest 140. The vehicle headrest 140 is disposed on the backrest 132. In a sitting process of the user, the vehicle headrest 140 may support and protect a head, to improve comfort of riding in the vehicle. It may be understood that in embodiments of this application, an example in which the user is a driver is used for description. However, embodiments of this application are not limited thereto, and the user may alternatively be another passenger.

In some implementations, the vehicle headrest 140 may be detachably connected to the top of the backrest 132. In another implementation, the vehicle headrest 140 and the backrest 132 may alternatively be of an integrated structure. This is not limited in embodiments of this application.

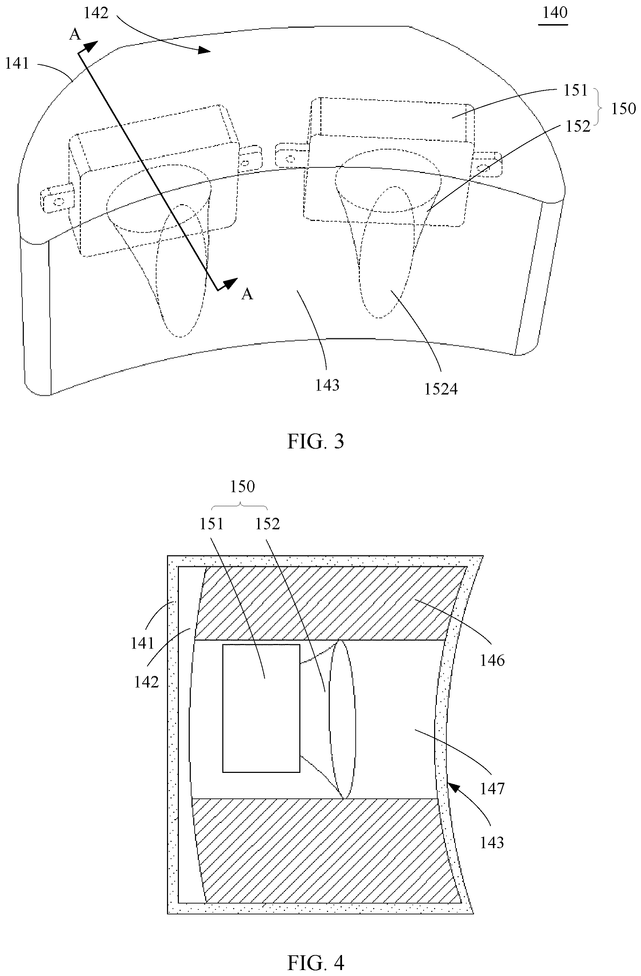

Refer to FIG. 3 and FIG. 4. FIG. 4 is a cross-sectional view in an A-A direction in FIG. 3. The vehicle headrest 140 may include an outer cover 141 and a buffer 146. A material of the outer cover 141 may include leather, cloth, and the like. The outer cover 141 includes a contact surface 143 for contact with the head of the user, to support the head of the user by using the contact surface 143. The outer cover 141 encloses an accommodation space 142, and the buffer 146 is disposed in the accommodation space 142, to maintain a shape of the outer cover 141. In addition, when the head of the user is in contact with the outer cover 141, the buffer 146 may provide a support force. For example, a material of the buffer may include a material with specific elasticity, for example, sponge and rubber.

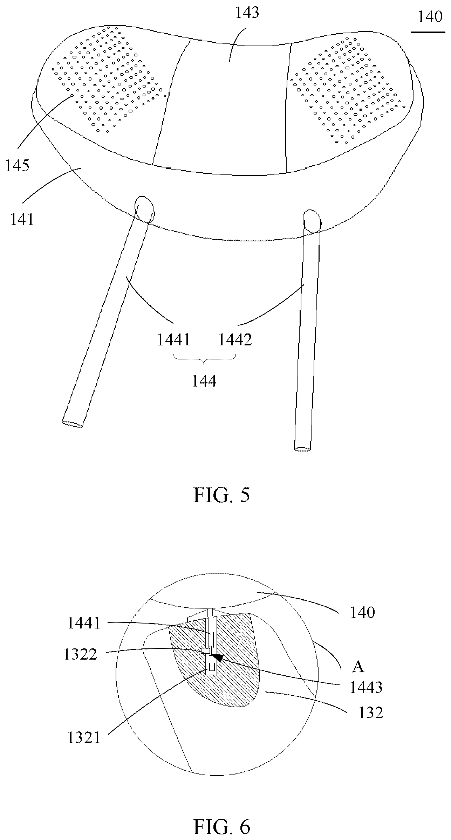

Refer to FIG. 5. The vehicle headrest 140 further includes a headrest bracket 144. The top of the headrest bracket 144 extends into the accommodation space 142 shown in FIG. 3, the top of the headrest bracket 144 is connected to the buffer 146 shown in FIG. 4, and the bottom of the headrest bracket 144 is connected to the backrest 132 shown in FIG. 2, to fasten the vehicle headrest 140. For example, the headrest bracket 144 includes a first fastening column 1441 and a second fastening column 1442. The first fastening column 1441 and the second fastening column 1442 are disposed in parallel, the top of the first fastening column 1441 and the top of the second fastening column 1442 are connected to the buffer 146, and the bottom of the first fastening column 1441 and the bottom of the second fastening column 1442 are connected to the backrest 132.

Refer to FIG. 6. In some implementations, a first mounting hole 1321 is provided on the backrest 132 shown in FIG. 2. The first fastening column 1441 penetrates through the first mounting hole 1321. A plurality of first clamping slots 1443 are spaced apart on the first fastening column 1441 in a direction parallel to a center line of the first fastening column 1441. Correspondingly, a first clamping block 1322 is disposed on the backrest 132. The first clamping block 1322 may be connected to the backrest 132 through a first spring. In addition, the first clamping block 1322 protrudes into the first mounting hole 1321 in a radial direction. When the first fastening column 1441 penetrates through the first mounting hole 1321, the first clamping block 1322 is clamped into one first clamping slot 1443 under an action of the first spring, to implement connection between the first fastening column 1441 and the backrest 132. The first clamping block 1322 is clamped into different first clamping slots 1443, so that an extension depth of the first fastening column 1441 into the first mounting hole 1321 can be adjusted, to adjust a distance between the outer cover 141 and the backrest 132 (that is, adjust a height of the vehicle headrest 140). This meets different requirements of the user and improves user experience.

Similarly, a second mounting hole is provided on the backrest 132 shown in FIG. 2. The second fastening column 1442 shown in FIG. 5 penetrates through the second mounting hole. A plurality of second clamping slots are spaced apart on the second fastening column 1442 in a direction parallel to a center line of the second fastening column 1442. Correspondingly, a second clamping block is disposed on the backrest 132. The second clamping block may be connected to the backrest 132 through a second spring. In addition, the second clamping block protrudes toward the second mounting hole in a radial direction. When the second fastening column 1442 penetrates through the second mounting hole, the second clamping block is clamped into one second clamping slot under an action of the second spring, to implement connection between the second fastening column 1442 and the backrest 132. The second clamping block is clamped into different second clamping slots, so that an extension depth of the second fastening column 1442 into the second mounting hole can be adjusted, to adjust the distance between the outer cover 141 and the backrest 132 (that is, adjust the height of the vehicle headrest 140).

Still refer to FIG. 3. In embodiments of this application, the vehicle headrest 140 further includes a speaker assembly 150, and the speaker assembly 150 is disposed in the accommodation space 142. Correspondingly, a mounting hole 147 (as shown in FIG. 4) is provided on the buffer 146. The speaker assembly 150 is disposed in the mounting hole 147. The speaker assembly 150 may be connected to the headrest bracket 144 shown in FIG. 5, so that the speaker assembly 150 is fastened. For example, a center line of the mounting hole 147 is approximately perpendicular to the contact surface 143, so that a sound emitted by the speaker assembly 150 may be propagated to the contact surface 143, and then propagated to the head of the user. Through this disposition, compared with the buffer 146 and the speaker assembly 150 being spaced apart in the accommodation space 142 (disposing the speaker assembly 150 outside the buffer 146), disposing the speaker assembly 150 in the mounting hole 147 on the buffer (disposing the speaker assembly 150 in the buffer 146) can improve structure compactness of the vehicle headrest 140, and reduce a volume of the vehicle headrest 140 while ensuring a large enough volume of the buffer 146.

It may be understood that the speaker assembly 150 may create a sound field within a specific range near the vehicle headrest 140, to play audio to the user. For example, the speaker assembly 150 may play music to the user, play an off-vehicle alarm sound (for example, a horn sound of another vehicle), perform active noise reduction (play a noise reduction sound), provide a privacy sound (for example, a call sound), and the like, to improve user experience. Certainly, in some implementations, the speaker assembly 150 may alternatively be disposed outside the cab and the passenger cabin, to play a sound to the outside of the vehicle, for example, raise a horn alarm to another vehicle on a road.

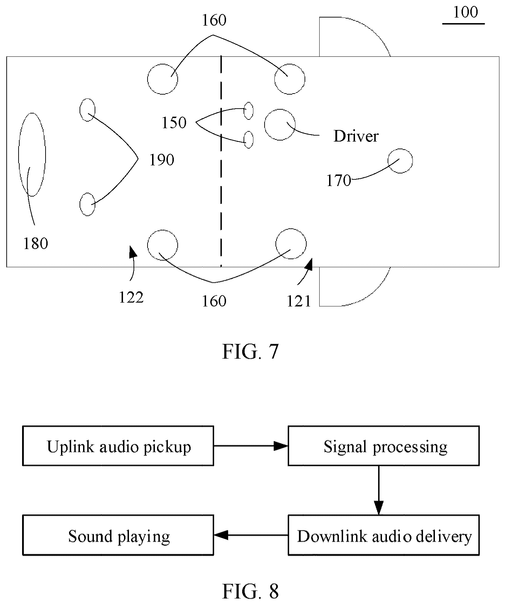

As shown in FIG. 7, in some embodiments, the vehicle 100 further includes a vehicle door speaker 160. The vehicle door speaker 160 may be disposed on an inner side of a vehicle door 123 (as shown in FIG. 1) on the vehicle body 120, to play audio to the cab 121 and the passenger cabin 122 by using the vehicle door speaker 160. Certainly, the vehicle 100 may further include a center speaker 170. The center speaker 170 may be disposed on a center console of the vehicle 100, and plays a sound simultaneously with the vehicle door speaker 160. This improves sound quality. In some implementations, the vehicle 100 further includes a subwoofer 180 and a surround sound speaker 190 that are disposed at the rear of the passenger cabin 122. During use, the speaker assembly 150, the vehicle door speaker 160, the center speaker 170, the subwoofer 180, and the surround sound speaker 190 in the vehicle headrest 140 shown in FIG. 3 work in cooperation with each other, to further improve sound quality in the cab 121 and the passenger cabin 122. A distance between the speaker assembly 150 in the vehicle headrest 140 and an ear of the user is small, and the speaker assembly 150 has large impact on sound listening experience of the user.

Refer to FIG. 8. In the foregoing implementation, an audio link in the cab 121 and the passenger cabin 122 shown in FIG. 7 may sequentially include: uplink audio pickup, signal processing, downlink audio delivery, and sound playing. For example, an in-vehicle infotainment of the vehicle 100 may perform uplink audio pickup by using a mobile phone of the user, to obtain an audio signal. Then, the in-vehicle infotainment processes the audio signal, and sends the signal to the speaker assembly 150, the vehicle door speaker 160, the center speaker 170, the subwoofer 180, and the surround sound speaker 190, to emit a sound by using the speaker assembly 150, the vehicle door speaker 160, the center speaker 170, the subwoofer 180, and the surround sound speaker 190.

Still refer to FIG. 3 and FIG. 4. In the foregoing implementation, the speaker assembly 150 may be flush with an end that is of the mounting hole 147 and that faces the contact surface 143, or there is a specific distance between the speaker assembly 150 and an end that is of the mounting hole 147 and that faces the contact surface 143, to avoid damage to the outer cover 141 caused by contact between the speaker assembly 150 and the outer cover 141. This also avoids contact between the speaker assembly 150 and the head of the user by using the outer cover 141, to avoid impact on experience of riding in the vehicle caused by abutting against the head of the user by the speaker assembly 150. As shown in FIG. 5, a plurality of through holes 145 may be spaced apart in a region that is on the contact surface 143 and that corresponds to the speaker assembly 150 shown in FIG. 3, and a sound may be transmitted to the user through the through hole 145.

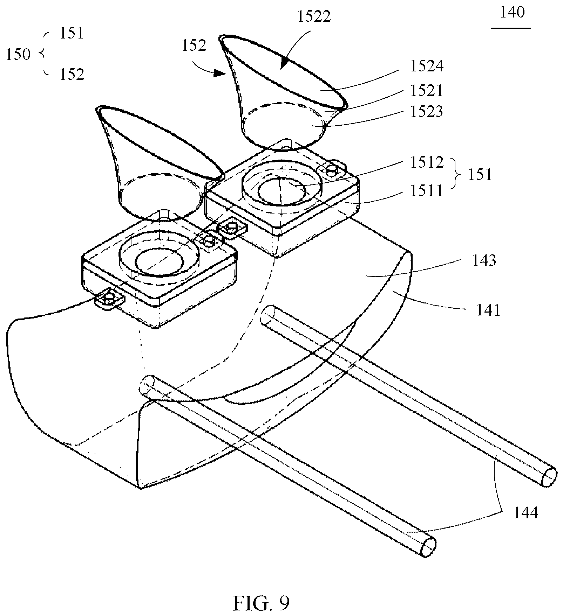

Refer to FIG. 9. The speaker assembly 150 includes a sound source 151 and an acoustic waveguide 152, and the acoustic waveguide 152 is connected to the sound source 151. The sound source 151 may include a device that can emit a sound, for example, a speaker. In some embodiments, the sound source 151 may include a body 1511, a coil, a magnet, and a diaphragm 1512. The magnet is disposed on the body 1511, the coil is connected to the diaphragm 1512, and the diaphragm 1512 is disposed on the body 1511. Through power supply to the coil, the coil may generate a magnetic field. The magnetic field and a magnetic field of the magnet may interact with each other, to drive the diaphragm 1512 to vibrate to generate a sound. In an implementation in which the sound source 151 includes a speaker, the body 1511 may include a basket of the speaker, and the diaphragm 1512 may include a paper cone of the speaker. The speaker emits a sound outward through vibration of the paper cone. In another implementation, the diaphragm 1512 may alternatively include an aluminum alloy film or the like. This is not limited in embodiments of this application, provided that the diaphragm 1512 can vibrate to generate a sound.

The acoustic waveguide 152 is configured to guide a sound emitted by the sound source 151, to form a uniform sound field in a specific region. The acoustic waveguide 152 may guide a sound wave to the contact surface 143, to form a uniform sound field in a region near the contact surface 143, to provide a sound for the user sitting on the seat 130 corresponding to the vehicle headrest 140. The acoustic waveguide 152 may be connected to the body 1511, to implement fastening between the acoustic waveguide 152 and the sound source 151. No additional structure is required to fasten the acoustic waveguide 152. This simplifies a structure of the speaker assembly 150. For example, the acoustic waveguide 152 may be connected to the body 1511 in a detachable manner, for example, through bolt connection or clamping. Certainly, the acoustic waveguide 152 may alternatively be connected to the body 1511 in a manner of welding, glue bonding, or the like. This is not limited in embodiments of this application.

In embodiments of this application, the acoustic waveguide 152 includes a sound guide body 1521, a sound guide channel 1522 is provided on the sound guide body 1521, and the sound guide channel 1522 includes a sound inlet 1523 and a sound outlet 1524. The sound inlet 1523 is provided directly opposite to the sound source 151, to receive a sound wave of the sound source 151, and the sound outlet 1524 is provided directly opposite to the contact surface 143 in FIG. 3 and FIG. 5, to form a sound field near the contact surface 143. In this way, a sound is provided for the ear of the user. The sound guide channel 1522 is configured to guide a sound from the sound inlet 1523 to the sound outlet 1524. It may be understood that, that the sound inlet 1523 is provided directly opposite to the sound source 151 may be that the sound inlet 1523 is provided facing the sound source 151. For example, a projection of the sound inlet 1523 onto a plane on which the diaphragm 1512 is located covers at least a part of the diaphragm 1512. That the sound outlet 1524 is provided directly opposite to the contact surface 143 may be that the sound outlet 1524 is provided facing the contact surface 143.

In the foregoing implementation, after a sound wave is emitted by the sound source 151, the sound wave enters the sound guide channel 1522 through the sound inlet 1523, and the sound wave is propagated from the sound inlet 1523 to the sound outlet 1524 in the sound guide channel 1522. During propagation, a shape of a sound field is the same as a shape of a cross section of the sound guide channel 1522, and changes with a change of the shape of the cross section of the sound guide channel 1522. In addition, a propagation direction of the sound field is approximately parallel to a center line of the sound guide channel 1522, and changes with a change of the center line of the sound guide channel 1522, to implement guidance of a sound wave.

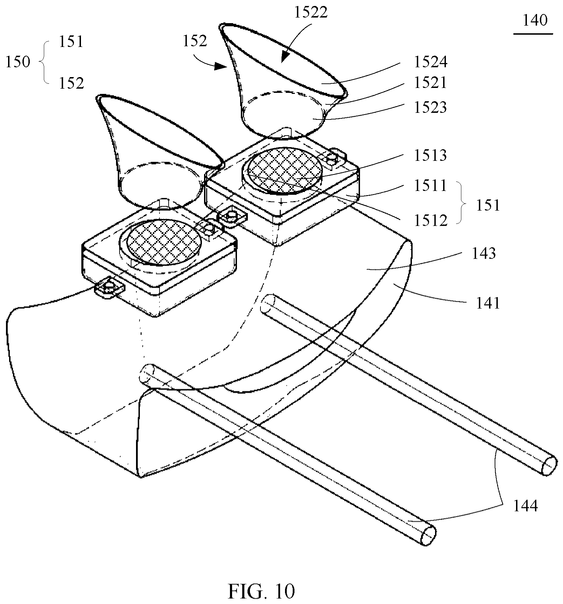

Refer to FIG. 10. In some embodiments, the speaker assembly 150 further includes a grille 1513. The grille 1513 is disposed between the diaphragm 1512 and the sound inlet 1523. The grille 1513 may prevent an external object from being in contact with the diaphragm 1512, to avoid scratching the diaphragm 1512, and may also prevent the external object from affecting vibration of the diaphragm 1512 due to contact between the external object and the diaphragm 1512 (for example, attaching of the external object to the diaphragm 1512), to avoid impact on sound emission of the diaphragm 1512. For example, the grille 1513 may include a metal mesh or a mesh woven by cotton ropes. A material of the grille 1513 is not limited in embodiments of this application. The grille 1513 may be connected to the body 1511 in a manner of glue bonding, clamping, or the like, so that the grille 1513 is fastened on the body 1511.

A projection of the sound inlet 1523 onto the sound source 151 may coincide with the diaphragm 1512. In this way, the sound inlet 1523 is directly opposite to the diaphragm 1512. Through this disposition, a sound wave emitted by the sound source 151 may directly enter the sound inlet 1523. This reduces a loss of the sound wave. For example, the projection of the sound inlet 1523 onto the sound source 151 may completely coincide with the diaphragm 1512. Certainly, the diaphragm 1512 may alternatively be located inside the projection of the sound inlet 1523 onto the sound source 151. This is not limited in this embodiment.

In the foregoing implementation, the sound field is a spatial position of a sound wave. The sound outlet 1524 is provided facing the contact surface 143, so that a sound field of the sound source 151 is located near the ear of the user under guidance of the sound guide channel 1522. After the user sits on the seat 130 shown in FIG. 2, the ear of the user is located in the sound field, so that the user easily listens to a sound of the sound source 151.

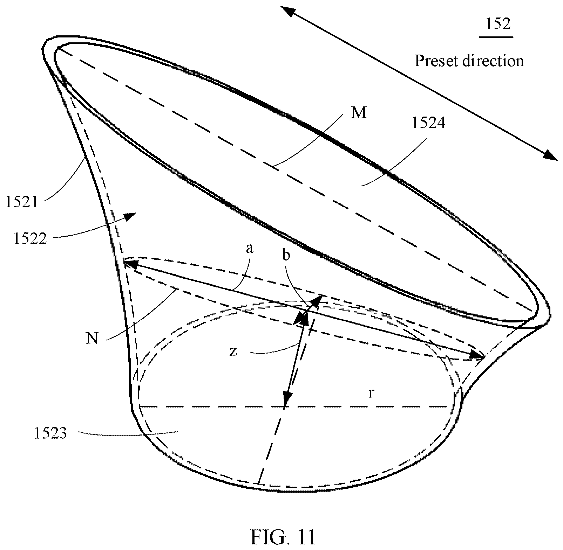

Refer to FIG. 11. In the foregoing implementation, the sound outlet 1524 is in an elliptical shape, and a major axis M of the elliptical shape is parallel to a preset direction. It may be understood that, a length of the major axis M of the elliptical shape is greater than a length of a minor axis. A propagation direction of the sound field is approximately parallel to the center line of the sound guide channel 1522, and changes with a change of the center line of the sound guide channel 1522, to implement guidance of a sound wave. A shape of the sound field at the sound outlet 1524 is the same as a shape of the sound outlet 1524. In comparison with a circular sound outlet with an equal area, the major axis of the elliptical shape is greater than a diameter of a circle. Therefore, a width of the sound field at the elliptical sound outlet 1524 in a direction parallel to the major axis is greater than a width of a sound field at the circular sound outlet. This increases a width of the sound field in the preset direction.

It may be understood that, the length of the major axis M of the elliptical shape is greater than the length of the minor axis. Therefore, when the width of the sound field in the direction parallel to the major axis is increased, a width of the sound field in a direction parallel to the minor axis is reduced, that is, a radiation capability in the direction parallel to the major axis is improved, and a radiation capability in the direction parallel to the minor axis is reduced, so that the speaker assembly 150 (as shown in FIG. 3) is similar to a linear sound source, that is, a radiation manner is similar to linear source radiation. In embodiments of this application, the preset direction is not limited, and the preset direction is related to a sound field expansion direction. In other words, the preset direction is parallel or approximately parallel to the sound field expansion direction, to increase a width of the sound field in the sound field expansion direction. The sound field expansion direction may be appropriately selected according to a use requirement of the vehicle 100 shown in FIG. 1. For example, the sound field expansion direction may be an approximately horizontal direction. In this way, a width of the sound field in the horizontal direction may be expanded, and when the head of the user shakes in the horizontal direction, the ear of the user may always be kept in the sound field. This prevents the ear of the user from deviating from the sound field. Alternatively, the sound field expansion direction may be an approximately vertical direction. In this way, a width of the sound field in the vertical direction may be expanded, and when the head of the user shakes in the vertical direction, the ear of the user may always be kept in the sound field. This prevents the ear of the user from deviating from the sound field, and improves sound listening experience.

Still refer to FIG. 11. It may be understood that the acoustic waveguide 152 in embodiments of this application may be further used in another sound source in addition to the sound source 151 on the vehicle headrest 140 in FIG. 3. For example, as shown in FIG. 7, the acoustic waveguide 152 may be used in the surround sound speaker 190, and the sound outlet 1524 is in an elliptical shape, so that far-field performance of the surround sound speaker 190 is more similar to a linear sound source. Therefore, at a long distance, a radiation capability in a direction perpendicular to a major axis is stronger, and appropriate setting of a direction of the major axis can improve sound listening experience. The acoustic waveguide 152 may alternatively be used in the center speaker 170, and the center speaker 170 may be a tweeter, to increase a width of a sound field in a preset direction. The acoustic waveguide 152 may alternatively be used in a heavy bass reflex module. The heavy bass reflex module includes a sound box and a bass speaker disposed on the sound box. A reflex hole is provided on the sound box. The acoustic waveguide 152 may be disposed in the reflex hole. The acoustic waveguide 152 acts as a reflex tube, that is, the acoustic waveguide 152 may guide bass. Appropriate setting of a direction of a major axis can adjust a region of a sound field. The acoustic waveguide 152 may alternatively be used in a sound source that plays a sound to the outside of the vehicle, to play a sound (for example, a horn alarm) outward. Because at a long distance, a radiation capability of the acoustic waveguide 152 in a direction perpendicular to a major axis is stronger. Correspondingly, the major axis may be perpendicular to the road (a preset direction is perpendicular to a horizontal plane), so that a sound field is mainly distributed on a same horizontal road, and another vehicle on the same road easily receives a sound played by the sound source. When the acoustic waveguide 152 is applied to another scenario, a sound field expansion direction may be the same as or different from the sound field expansion direction of the acoustic waveguide 152 used in the vehicle headrest 140 shown in FIG. 3, and the sound field expansion direction may be appropriately set according to a specific use requirement.

Refer to 11. According to the acoustic waveguide 152 provided in embodiments of this application, the sound guide channel 1522 is provided on the sound guide body 1521, the sound guide channel 1522 includes the sound inlet 1523 and the sound outlet 1524, the sound inlet 1523 is provided directly opposite to the sound source 151 shown in FIG. 3, the sound outlet 1524 is in the elliptical shape, the major axis M of the elliptical shape is parallel to the preset direction, and the preset direction is related to the sound field expansion direction. Through this disposition, after a sound wave is emitted by the sound source 151, the sound wave enters the sound guide channel 1522 through the sound inlet 1523, and the sound wave is propagated from the sound inlet 1523 to the sound outlet 1524 in the sound guide channel 1522. During propagation, the shape of the sound field is the same as the shape of the cross section of the sound guide channel 1522, and changes with a change of the shape of the cross section of the sound guide channel 1522. In addition, the propagation direction of the sound field is approximately parallel to the center line of the sound guide channel 1522, and changes with a change of the center line of the sound guide channel 1522, to implement guidance of a sound wave. The shape of the sound field at the sound outlet 1524 is the same as the shape of the sound outlet 1524. In comparison with a circular sound outlet with an equal area, the major axis of the elliptical shape is greater than a diameter of a circle. Therefore, the width of the sound field at the elliptical sound outlet 1524 in the direction parallel to the major axis is greater than a width of a sound field at the circular sound outlet. This increases a width of the sound field in the preset direction. In this way, when the head of the user shakes, the ear of the user is always kept in the sound field, so that the ear of the user is prevented from deviating from the sound field. This improves sound listening experience.

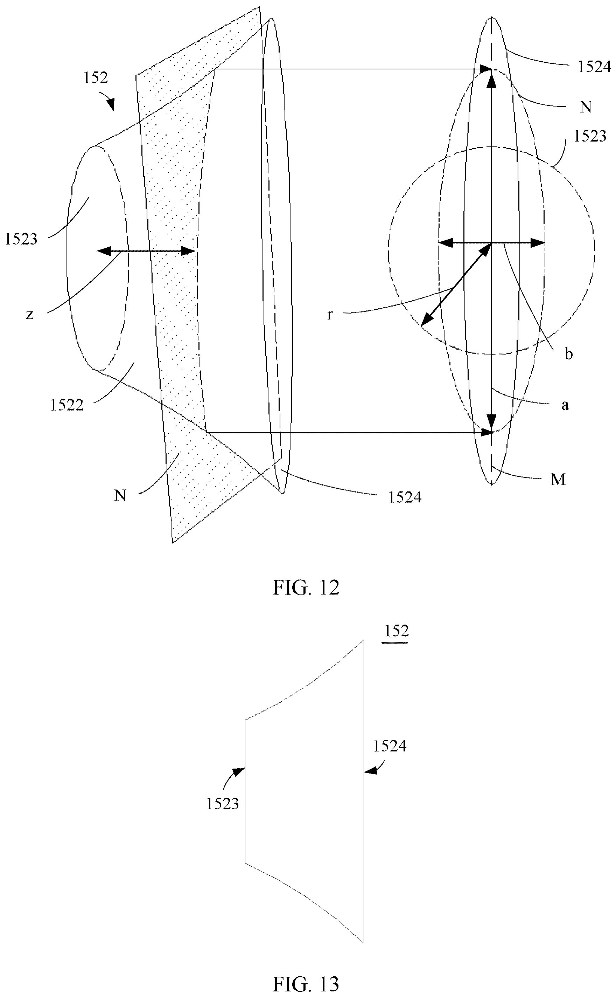

Refer to FIG. 12 and FIG. 13. FIG. 13 is a main view of the acoustic waveguide 152 shown in FIG. 12. A right figure in FIG. 12 is a diagram of positions of the sound inlet 1523, the sound outlet 1524, and the cross section N. In the foregoing implementation, the cross section N of the sound guide channel 1522 is in an elliptical shape, that is, any cross section that is of the sound guide channel 1522 and that is perpendicular to a sound wave transmission direction is in an elliptical shape. An area of the sound inlet 1523 is equal to an area of the cross section N (an area of the elliptical shape) of the sound guide channel 1522, that is, the area of the sound inlet 1523 is equal to an area of any cross section that is of the sound guide channel 1522 and that is perpendicular to the sound wave transmission direction.

A sound wave is propagated in the sound guide channel 1522 under specific conditions. A sound wave whose frequency is greater than a cut-off frequency may be propagated in the sound guide channel 1522, and transmission of a sound wave whose frequency is lower than the cut-off frequency is limited. However, in the foregoing implementation, the area of the cross section of the sound guide channel 1522 remains unchanged, and in this case, a winding index of the sound guide channel 1522 is zero; and the cut-off frequency is in a multiple relationship with the winding index, and when the winding index is zero, the cut-off frequency is also zero, that is, there is no cut-off frequency. Therefore, impact of the cut-off frequency on sound wave transmission is avoided, and a limitation on sound wave transmission is avoided. The winding index is a parameter that determines a change speed of the area of the cross section of the sound guide channel 1522. Areas of cross sections of the sound guide channel 1522 are equal. Therefore, the winding index is zero.

In embodiments of this application, the area of the sound inlet 1523 is equal to an area of the sound outlet 1524. Through this disposition, sound intensity in a unit area of the sound outlet 1524 is the same as sound intensity in a unit area of the sound inlet 1523. This ensures sound quality at the sound outlet 1524.

Still refer to FIG. 11 and FIG. 12. In some embodiments, the sound inlet 1523 is in a circular shape, a major axis of the cross section of the sound guide channel 1522 is a first target multiple of a radius of the sound inlet 1523, and the first target multiple is a first exponential function with a preset constant as a base. A minor axis of the cross section is a second target multiple of the radius of the sound inlet 1523, and the second target multiple is a second exponential function with the preset constant as a base. An exponent of the first exponential function and an exponent of the second exponential function are additive inverses, and the preset constant is greater than 1. Through this disposition, when a length of the major axis of the cross section of the sound guide channel 1522 changes, it can still be ensured that the area of the cross section of the sound guide channel 1522 remains unchanged (that is, the area of the sound inlet 1523 is equal to the area of the cross section that is of the sound guide channel 1522 and that is perpendicular to the sound wave transmission direction). This avoids impact of the cut-off frequency on sound wave transmission.

For example, any cross section N of the sound guide channel 1522 and the radius of the sound inlet 1523 satisfy the following relationship:

$$b = rd^{-\alpha z};$$

and

$$a = rd^{\alpha z}$$

Herein, $b$ is the minor axis of the cross section N, $a$ is the major axis of the cross section N, $r$ is the radius of the sound inlet 1523, $\alpha$ is a constant greater than 0, and $d$ is the preset constant. Larger $\alpha$ indicates a longer major axis of the sound outlet 1524 and a larger width of the sound field in a major axis direction, so that a uniform sound field is obtained near the major axis direction. For example, an appropriate $\alpha$ value may be set based on a shape of the vehicle headrest, so that the major axis occupies 70% to 80% of the height of the vehicle headrest. $z$ is a distance between the cross section N and the sound inlet 1523, namely, a distance between an intersection point between the major axis and the minor axis of the cross section and a circle center of the sound inlet 1523. An area of any cross section N of the sound guide channel 1522 $S = \pi ab = \pi r^2$, where $S$ is the area of the cross section N, and $\pi$ is a ratio of a circumference to a diameter of a circle. Through this disposition, functions of the major axis and the minor axis of the sound guide channel 1522 are simplified while ensuring that the area of the cross section N of the sound guide channel 1522 remains unchanged.

The preset constant $d$ is not limited in embodiments of this application. In some implementations, $d = e$, where $e$ is a natural constant. For example, the radius $r$ of the sound inlet 1523 may be 2.5 cm, the major axis $a$ of the cross section N is 10 cm, and the distance $z$ between the cross section N and the sound inlet 1523 is 5. Correspondingly, $e^{\alpha \times 5} = \frac{a}{r} = \frac{10}{2.5} = 4$, $e^{\alpha} = \sqrt[5]{4}$, and $\alpha = \log_e \left( \sqrt[5]{4} \right)$.

Certainly, in another implementation, $d$ may alternatively be another constant greater than 1. For example, $d = 10$, the radius $r$ of the sound inlet 1523 may be 2.5 cm, the major axis $a$ of the cross section N is 10 cm, and the distance $z$ between the cross section N and the sound inlet 1523 is 5. Correspondingly, $\alpha = \log_{10} \left( \sqrt[5]{4} \right)$.

Still refer to FIG. 12 and FIG. 13. In embodiments of this application, the center line of the sound guide channel 1522 may be a straight line. Certainly, the center line of the sound guide channel 1522 may alternatively be a curve, to change a propagation direction of a sound wave. This is not limited in embodiments of this application.

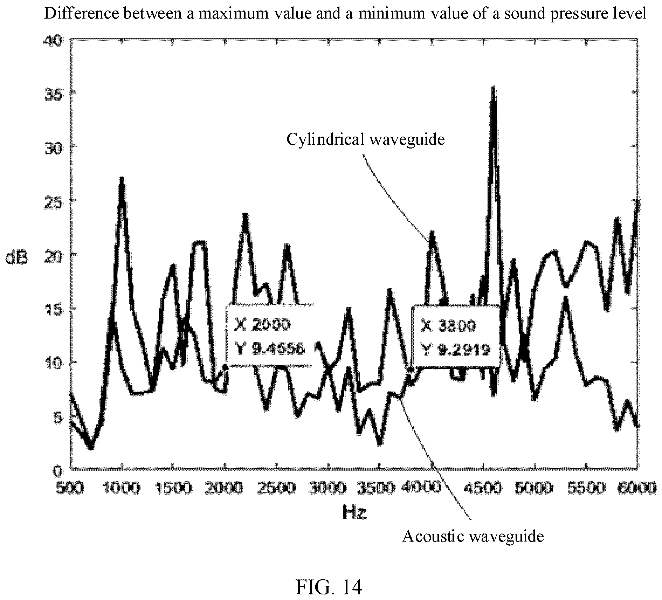

Refer to FIG. 14. FIG. 14 is a curve diagram of comparison between a difference between a maximum value and a minimum value of a sound pressure level of a cylindrical waveguide and a difference between a maximum value and a minimum value of a sound pressure level of the acoustic waveguide according to an embodiment of this application. A sound guide channel of the cylindrical waveguide is cylindrical. In the figure, a horizontal coordinate X is a sound wave frequency (unit: Hz), and a vertical coordinate Y is differences (unit: dB) between maximum values and minimum values of sound pressure levels of sound fields of the cylindrical waveguide and the acoustic waveguide. A symbol of the sound pressure level is *SPL,* and

$$SPL = 20log10 \frac{p_e}{p_{ref}} \ (\text{dB})$$, where $p_{ref}$ is reference sound pressure, and is usually $2 \times 10^{-5}$

Pa. This value is a sound pressure value at which a 1-kHz sound can just be perceived by a human ear, namely, audible threshold sound pressure of the 1-kHz sound. The human ear cannot perceive a sound with a sound pressure value lower than the sound pressure value. A sound pressure level of the audible threshold sound pressure is 0 dB. $p_e$ is sound pressure to be tested. It can be learned from FIG. 14 that, on the whole, a curve corresponding to the acoustic waveguide is below a curve corresponding to the cylindrical waveguide. Therefore, the difference between the maximum value and the minimum value of the sound pressure level of the sound field of the acoustic waveguide is small, that is, uniformity of the sound field is high. This improves the uniformity of the sound field.

In embodiments of this application, there may be a plurality of quantities and positions of speaker assemblies 150 disposed in the vehicle headrest 140.

A possible implementation is as follows.

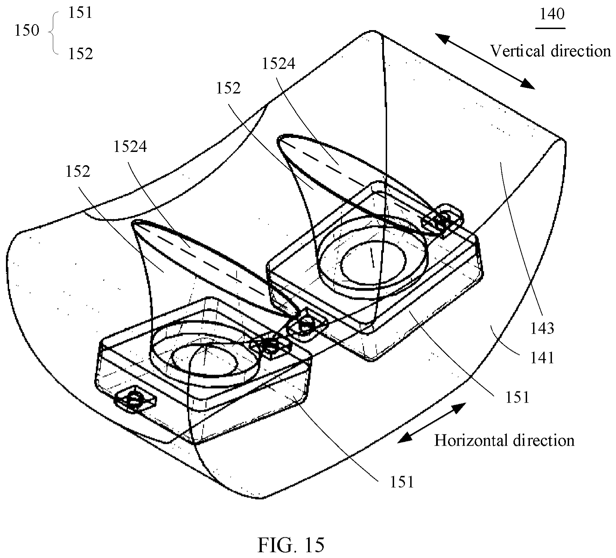

Refer to FIG. 15. There are two speaker assemblies 150, and the two speaker assemblies 150 are spaced apart in the horizontal direction. It may be understood that horizontal setting herein is that the two speaker assemblies 150 are spaced apart in an approximately horizontal direction, that is, a connection line between the two speaker assemblies 150 may be parallel to the horizontal plane, or there may be a specific included angle between a connection line and the horizontal plane. Through this disposition, the head of the user may be located between the two speaker assemblies 150, and each speaker assembly 150 corresponds to one ear of the user. This improves sound listening effect of the user.

In the foregoing implementation, the preset direction may be perpendicular to the horizontal plane, that is, the preset direction is parallel to the vertical direction, to increase the width of the sound field in the vertical direction. Because the width of the sound field in the vertical direction is large, in a traveling process of the vehicle, even if the head of the user shakes in the vertical direction, it can still be ensured that the ear of the user is located in the sound field, to prevent the ear of the user from deviating from the sound field. This avoids affecting sound listening experience.

It may be understood that, in embodiments of this application, the preset direction is approximately perpendicular to the horizontal plane. In other words, the preset direction is parallel to the vertical direction, or there is a specific included angle between the preset direction and the vertical direction.

A possible implementation is as follows.

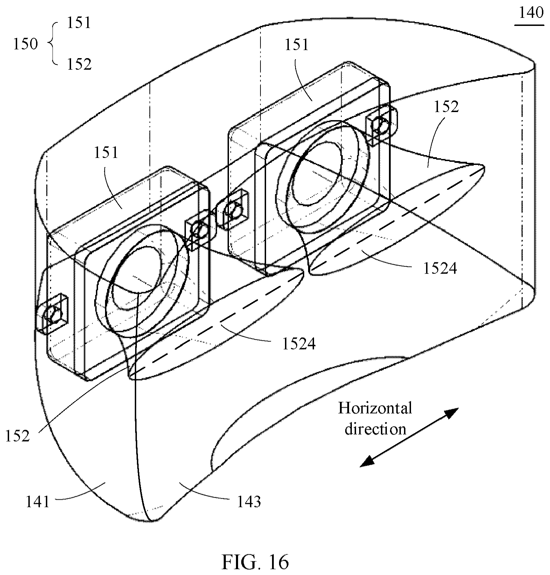

Refer to FIG. 16. A difference from the foregoing implementation lies in that the preset direction is parallel to the horizontal plane (the major axis of the sound outlet 1524 is parallel to the horizontal plane), that is, the preset direction is parallel to the horizontal direction. In this case, the width of the sound field in the horizontal direction may be increased. Because the width of the sound field in the horizontal direction is large, in a traveling process of the vehicle, even if the head of the user shakes in the horizontal direction, it can still be ensured that the ear of the user is located in the sound field, to prevent the ear of the user from deviating from the sound field. This avoids affecting sound listening experience.

It may be understood that, in embodiments of this application, the preset direction is approximately parallel to the horizontal direction. In other words, the preset direction may be parallel to the horizontal direction, or there may be a specific included angle between the preset direction and the horizontal direction.

A possible implementation is as follows.

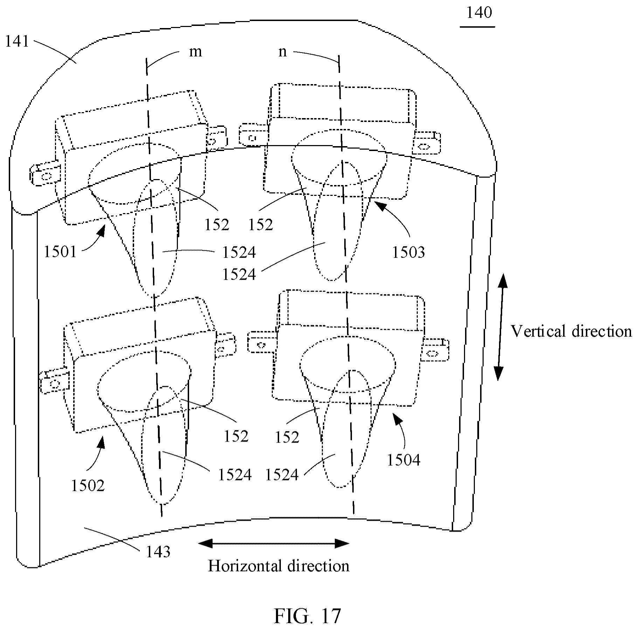

Refer to FIG. 17. A difference from the foregoing implementation lies in that the speaker assembly 150 includes a first speaker assembly 1501, a second speaker assembly 1502, a third speaker assembly 1503, and a fourth speaker assembly 1504, the first speaker assembly 1501 and the second speaker assembly 1502 are spaced apart in the vertical direction, the third speaker assembly 1503 and the fourth speaker assembly 1504 are spaced apart in the vertical direction, the first speaker assembly 1501 and the third speaker assembly 1503 are spaced apart in the horizontal direction, and the second speaker assembly 1502 and the fourth speaker assembly 1504 are spaced apart in the horizontal direction. Correspondingly, a connection line between the first speaker assembly 1501 and the second speaker assembly 1502 is a first connection line, a connection line between the third speaker assembly 1503 and the fourth speaker assembly 1504 is a second connection line, and the head of the user may be located in a region between the first connection line and the second connection line. Through this disposition, two speaker assemblies are disposed on each of two sides of the head of the user in the horizontal direction. In this way, an area of a sound field on one side of the head of the user may be increased, to further prevent the ear from deviating from the sound field due to shaking of the head. This further improves sound listening experience.

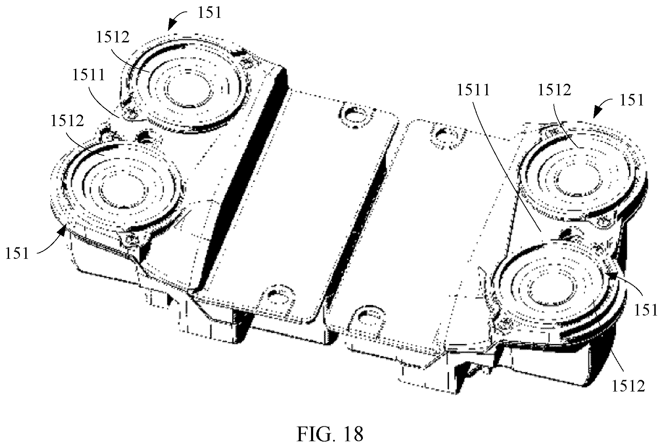

As shown in FIG. 18, for example, each speaker assembly 150 correspondingly has one sound source 151, and each sound source 151 has one diaphragm 1512. Four diaphragms 1512 corresponding to the first speaker assembly 1501, the second speaker assembly 1502, the third speaker assembly 1503, and the fourth speaker assembly 1504 may be distributed at four vertices of a quadrilateral.

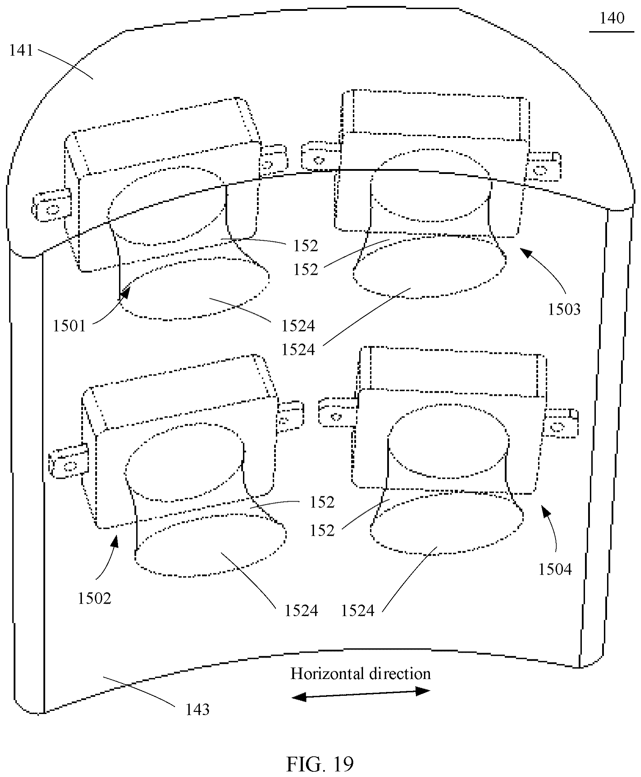

Still refer to FIG. 17. In some embodiments, preset directions of the first speaker assembly 1501, the second speaker assembly 1502, the third speaker assembly 1503, and the fourth speaker assembly 1504 may be the same. For example, the preset directions of the first speaker assembly 1501, the second speaker assembly 1502, the third speaker assembly 1503, and the fourth speaker assembly 1504 may all be approximately parallel to the vertical direction, to further increase the width of the sound field in the vertical direction. Alternatively, refer to FIG. 19. The preset directions of the first speaker assembly 1501, the second speaker assembly 1502, the third speaker assembly 1503, and the fourth speaker assembly 1504 may all be approximately parallel to the horizontal direction, to further increase the width of the sound field in the horizontal direction.

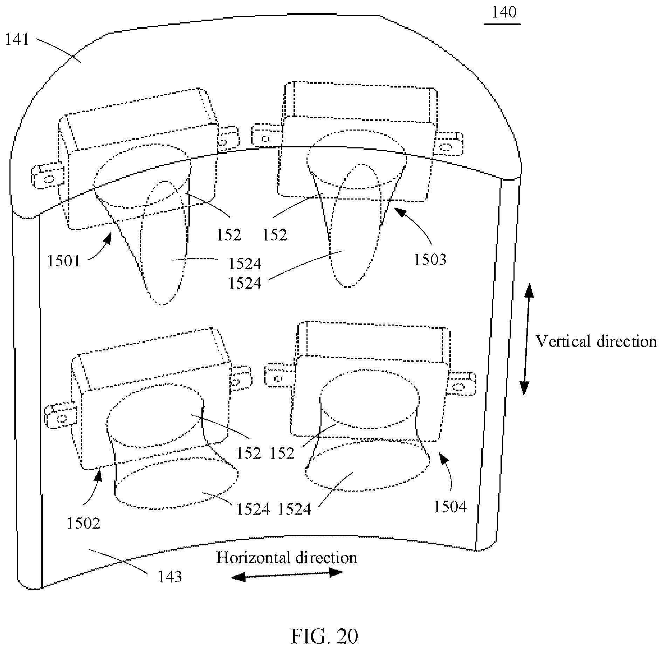

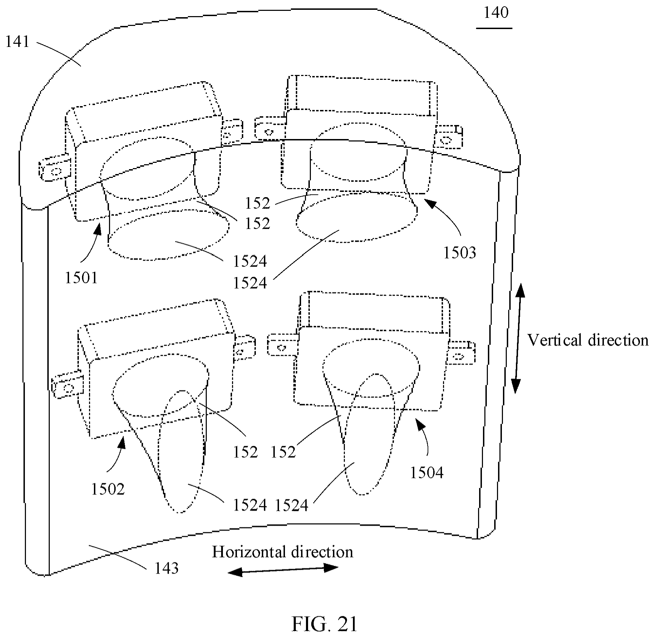

Refer to FIG. 20 and FIG. 21. In another embodiment, preset directions of the first speaker assembly 1501 and the third speaker assembly 1503 are the same, preset directions of the second speaker assembly 1502 and the fourth speaker assembly 1504 are the same, and preset directions of the first speaker assembly 1501 and the second speaker assembly 1502 are different.

For example, as shown in FIG. 20, the preset directions of the first speaker assembly 1501 and the third speaker assembly 1503 may be approximately parallel to the vertical direction. Correspondingly, the preset directions of the second speaker assembly 1502 and the fourth speaker assembly 1504 are approximately parallel to the horizontal direction. Alternatively, as shown in FIG. 21, the preset directions of the first speaker assembly 1501 and the third speaker assembly 1503 may be approximately parallel to the horizontal direction. Correspondingly, the preset directions of the second speaker assembly 1502 and the fourth speaker assembly 1504 are approximately parallel to the vertical direction. Through the foregoing disposition, widths of the sound field in both the vertical direction and the horizontal direction are large, to further prevent the ear from deviating from the sound field due to shaking of the head. This further improves driving experience.

Finally, it should be noted that the foregoing embodiments are merely intended for describing the technical solutions of embodiments of this application but not for limiting this application. Although this application is described in detail with reference to the foregoing embodiments, a person of ordinary skill in the art should understand that modifications may still be made to the technical solutions described in the foregoing embodiments or equivalent replacements are made to some or all technical features thereof, without departing from the scope of the technical solutions of embodiments of this application. Therefore, the protection scope of this application shall be subject to the protection scope of the claims.

**Claims**

1. An acoustic waveguide, comprising:
   a sound guide body, wherein a sound guide channel is provided on the sound guide body, the sound guide channel comprises a sound inlet and a sound outlet, the sound inlet is provided directly opposite to a sound source, the sound outlet is in an elliptical shape, a major axis of the elliptical shape is parallel to a preset direction, and the preset direction is related to a sound field expansion direction.

2. The acoustic waveguide according to claim 1, wherein an area of the sound inlet is equal to an area of the sound outlet.

3. The acoustic waveguide according to claim 1 or 2, wherein a cross section of the sound guide channel is in an elliptical shape, and the area of the sound inlet is equal to an area of the cross section of the sound guide channel.

4. The acoustic waveguide according to claim 3, wherein the sound inlet is in a circular shape, a major axis of the cross section is a first target multiple of a radius of the sound inlet, the first target multiple is a first exponential function with a preset constant as a base, a minor axis of the cross section is a second target multiple of the radius of the sound inlet, the second target multiple is a second exponential function with the preset constant as a base, an exponent of the first exponential function and an exponent of the second exponential function are additive inverses, and the preset constant is greater than 1.

5. The acoustic waveguide according to claim 4, wherein the cross section of the sound guide channel and the radius of the sound inlet satisfy the following relationship:

$$b = rd^{-\alpha z};$$

and

$$a = rd^{\alpha z},$$

wherein
*b* is the minor axis of the cross section, *a* is the major axis of the cross section, *r* is the radius of the sound inlet, $\alpha$ is a constant greater than 0, *d* is the preset constant, and *z* is a distance between the cross section and the sound inlet.

6. The acoustic waveguide according to claim 5, wherein *d = e,* and *e* is a natural constant.

7. The acoustic waveguide according to any one of claims 1 to 6, wherein a projection of the sound inlet onto the sound source coincides with a diaphragm of the sound source.

8. A speaker assembly, comprising:

    a sound source; and
    the acoustic waveguide according to any one of claims 1 to 7, wherein the acoustic waveguide is connected to the sound source.

9. The speaker assembly according to claim 8, wherein the sound source comprises a body and a diaphragm disposed on the body, the acoustic waveguide is connected to the body, and the diaphragm is disposed directly opposite to the sound inlet.

10. The speaker assembly according to claim 9, wherein the speaker assembly further comprises a grille, and the grille is disposed between the diaphragm and the sound inlet.

11. A vehicle headrest, comprising:

    an outer cover, wherein the outer cover encloses an accommodation space, and the outer cover comprises a contact surface in contact with a head of a user; and
    the speaker assembly according to any one of claims 8 to 10, wherein the speaker assembly is disposed in the accommodation space, and the sound outlet is provided directly opposite to the contact surface.

12. The vehicle headrest according to claim 11, wherein there are two speaker assemblies, and the two speaker assemblies are spaced apart in a horizontal direction.

13. The vehicle headrest according to claim 11, wherein the speaker assembly comprises a first speaker assembly, a second speaker assembly, a third speaker assembly, and a fourth speaker assembly, the first speaker assembly and the second speaker assembly are spaced apart in a vertical direction, the third speaker assembly and the fourth speaker assembly are spaced apart in the vertical direction, the first speaker assembly and the third speaker assembly are spaced apart in a horizontal direction, and the second speaker assembly and the fourth speaker assembly are spaced apart in the horizontal direction.

14. The vehicle headrest according to any one of claims 11 to 13, wherein the vehicle headrest further comprises a buffer, the buffer is disposed in the accommodation space, a mounting hole is provided on the buffer, and the speaker assembly is disposed in the mounting hole.

15. The vehicle headrest according to any one of claims 11 to 14, wherein the preset direction is perpendicular to a horizontal plane.

16. The vehicle headrest according to any one of claims 11 to 14, wherein the preset direction is parallel to a horizontal plane.

17. A vehicle, comprising at least one of the acoustic waveguide according to any one of claims 1 to 7, the speaker assembly according to any one of claims 8 to 10, or the vehicle headrest according to any one of claims 11 to 16.

18. A vehicle, comprising a seat and the vehicle headrest according to any one of claims 11 to 16, wherein the seat comprises a seat cushion and a backrest, and the vehicle headrest is disposed on the backrest.

100

120

110

FIG. 1

130

140

1441

A

132

131

FIG. 2

140

142

A

141

151
152
} 150

A

143        1524

FIG. 3

150
151    152

141
142

146

147

143

FIG. 4

143
140

145
141

1441    1442
144

FIG. 5

1441
1322

1321

140
A
1443
132

FIG. 6

FIG. 7

FIG. 8

FIG. 9

FIG. 10

FIG. 11

FIG. 12

FIG. 13

Difference between a maximum value and a minimum value of a sound pressure level

FIG. 14

150 { 151
       152

151

1524

152

1524

152

140

Vertical direction

143

141

151

151

151

Horizontal direction

FIG. 15

FIG. 16

FIG. 17

FIG. 18

FIG. 19

FIG. 20

FIG. 21

## INTERNATIONAL SEARCH REPORT

| International application No. |
|---|
| **PCT/CN2024/073904** |

**A.    CLASSIFICATION OF SUBJECT MATTER**

H04R 9/06(2006.01)i

According to International Patent Classification (IPC) or to both national classification and IPC

**B.    FIELDS SEARCHED**

Minimum documentation searched (classification system followed by classification symbols)

IPC: H04R

Documentation searched other than minimum documentation to the extent that such documents are included in the fields searched

Electronic data base consulted during the international search (name of data base and, where practicable, search terms used)

CJFD, CNTXT, DWPI, ENTXT, ENTXTC, VEN, WPABS, WPABSC, CNKI: 长轴, 汽车, 声导, 头枕, 椭圆, 扬声器, 引导, automobile, ellipse, long axis, major axis, headrest, acoustic conductance, audio, loudspeaker

**C.    DOCUMENTS CONSIDERED TO BE RELEVANT**

| Category* | Citation of document, with indication, where appropriate, of the relevant passages | Relevant to claim No. |
|---|---|---|
| X | EP 2699018 A1 (BANG & OLUFSEN AS) 19 February 2014 (2014-02-19) <br> description, paragraphs [0056]-[0085] | 1-18 |
| A | JP 2008124676 A (ONKYO K. K.) 29 May 2008 (2008-05-29) <br> entire document | 1-18 |
| A | CN 114339496 A (WEIFANG GOERTEK DYNAUDIO ELECTRONIC TECHNOLOGY CO., LTD.) 12 April 2022 (2022-04-12) <br> entire document | 1-18 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 March 2024** | **14 March 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/073904**

| Patent document cited in search report | | | Publication date (day/month/year) | Patent family member(s) | | | Publication date (day/month/year) |
|---|---|---|---|---|---|---|---|
| EP | 2699018 | A1 | 19 February 2014 | EP | 2699018 | B1 | 08 November 2017 |
| JP | 2008124676 | A | 29 May 2008 | JP | 4305492 | B2 | 29 July 2009 |
| CN | 114339496 | A | 12 April 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310233412